# EUROPÄISCHE PATENTANMELDUNG

(11) **EP 1 935 691 A2**
(43) Veröffentlichungstag der Anmeldung: **25.06.2008**
(21) Anmeldenummer: 07024253.2
(22) Anmeldetag: 14.12.2007
(51) Int. Cl.: B60J 7/14

(54) **Verdeck eines Cabriolet-Fahrzeugs mit wenigstens zwei Dachsegmenten**

(30) Priorität: 19.12.2006 DE 102006059937
(71) Anmelder: Wilhelm Karmann GmbH, 49084 Osnabrück (DE)
(72) Erfinder: Brockhoff, Franz-Ulrich, 49565 Bramsche (DE)

(57) **Zusammenfassung**

Es wird ein Verdeck (3) eines Cabriolet-Fahrzeugs (1) mit wenigstens zwei Dachsegmenten (17, 19, 21) vorgeschlagen, welches in einem geschlossenen Zustand einen Fahrgastraum (7) überspannt und in einen offenen Zustand überführbar ist, wobei ein vorderes Dachsegment (17) in geschlossenem Zustand des Verdecks (3) an einem Windschutzscheibenrahmen (11) festlegbar ist. Dabei ist erfindungsgemäß vorgesehen, dass das vordere Dachsegment (17) zweiteilig ausgebildet ist, mit einem einen Grundkörper des vorderen Dachsegments (17) bildenden ersten Dachelement (23) und einem hieran angelenkten, einen Randbereich des vorderen Dachsegments (17) gegenüber dem Windschutzscheibenrahmen (11) bildenden zweiten Dachelement (25), welches in einem bezüglich einer Fahrzeugquerrichtung wenigstens annähernd mittigen Bereich des ersten Dachelements (23) angeordnet ist und um eine sich in Fahrzeugquerrichtung erstreckende Schwenkachse (27) verschwenkbar ist.

## Beschreibung

Die Erfindung betrifft ein Verdeck eines Cabriolet-Fahrzeugs mit wenigstens zwei Dachsegmenten nach der im Oberbegriff des Patentanspruches 1 näher definierten Art.

Beispielsweise aus der DE 44 35 222 C1 ist ein derartiges Verdeck bekannt, welches ein während der Fahrt öffnungsfähiges vorderes Dachteil aufweist, das an Führungen, zwischen seitlichen Dachteilen in Fahrzeuglängsrichtung in beliebige Öffnungspositionen schiebedachartig verfahrbar ist.

Durch eine translatorische Verlagerung des vorderen Dachteils und ein Einklappen der seitlichen Führungen kann zwar der Bauraumbedarf für einen in Fahrzeuglängsrichtung verlaufenden heckseitigen Stauraum zur Aufnahme des Verdecks in einer Öffnungsposition des Verdecks verringert werden, jedoch ist hierfür ein aufwändiger Verlagerungsmechanismus erforderlich.

Es ist somit Aufgabe der vorliegenden Erfindung, ein Verdeck eines Cabriolet-Fahrzeugs mit wenigstens zwei Dachsegmenten zu schaffen, welches in geöffnetem Zustand einen möglichst geringen in Fahrzeuglängsrichtung verlaufenden Stauraum benötigt und auf konstruktiv einfache weise in eine Ablageposition in diesem Stauraum überführt werden kann.

Diese Aufgabe wird bei einem Verdeck eines Cabriolet-Fahrzeugs mit wenigstens zwei Dachsegmenten der eingangs genannten Art gemäß den Merkmalen des kennzeichnenden Teils des Patentanspruches 1 gelöst.

Die Erfindung sieht ein Verdeck eines Cabriolet-Fahrzeugs mit wenigstens zwei Dachsegmenten vor, welches in einem geschlossenen Zustand einen Fahrgastraum überspannt und in einen offenen Zustand überführbar ist, wobei ein vorderes Dachsegment in geschlossenem Zustand des Verdecks an einem Windschutzscheibenrahmen festlegbar ist. Dabei ist erfindungsgemäß vorgesehen, dass das vordere Dachsegment zweiteilig ausgebildet ist, mit einem einen Grundkörper des vorderen Dachsegments bildenden ersten Dachelement und einem hieran angelenkten, einen Randbereich des vorderen Dachsegments gegenüber dem Windschutzscheibenrahmen bildenden zweiten Dachelement, welches in einem bezüglich einer Fahrzeugquerrichtung wenigstens annähernd mittigen Bereich des ersten Dachelements angeordnet ist und um eine sich in Fahrzeugquerrichtung erstreckende Schwenkachse verschwenkbar ist.

In vorteilhafter Weise kann bei der Ablage eines erfindungsgemäßen Verdecks in einem heckseitigen Stauraum ein Fahrzeugheckbereich hinsichtlich seiner Länge sehr kurz ausgebildet werden. Der bei herkömmlichen Verdecken benötigte Platz in Fahrzeuglängsrichtung ist bei einem erfindungsgemäßen Verdeck dadurch verkürzt, dass das zweite Dachelement des vorderen Dachsegments in konstruktiv einfacher Weise in eine Ablageposition des Verdecks verschwenkt wird, wobei in Ablageposition des Verdecks beispielsweise Platz zur Anordnung von Fondsitzelementen oder ganzen Fondsitzen entsteht beziehungsweise das Verdeck in Ablageposition in Fahrzeugfrontrichtung verschoben angeordnet werden kann.

Das erfindungsgemäße Verdeck kann insbesondere als sogenanntes Hardtop ausgebildet sein, welches vorzugsweise mit zwei oder drei Dachsegmenten ausgebildet ist, wobei das Verdeck in einer alternativen Ausgestaltung der Erfindung auch mehrteilig ausgebildet sein kann.

Besonders vorteilhaft ist es, wenn die Schwenkachse des zweiten Dachelements in einem einem Fahrzeugheck zugewandten Bereich des zweiten Dachelements angeordnet ist, so dass das zweite Dachelement des vorderen Dachelements in Ablageposition des Verdecks mit den anderen Dachsegmenten eine kompakte Einheit bildet.

Zur Bildung einer kompakten Einheit des Verdecks in einer Ablageposition ist es auch vorteilhaft, wenn das zweite Dachelement des vorderen Dachsegments bei einer Überführung des Verdecks von einer geschlossenen in eine offene Position in Fahrzeugbodenrichtung um seine Schwenkachse bewegt wird und in offenem Zustand des Verdecks wenigstens annähernd vertikal in einem heckseitigen Raum ablegbar ist.

In einer vorteilhaften Ausgestaltung der Erfindung ist es vorgesehen, dass die Verlagerung des zweiten Dachelements des vorderen Dachsegments zwangsgesteuert über eine Verdeckkinematik erfolgt. Somit ist zur Bewegung des zweiten Dachelements kein separater Antrieb nötig und die Bewegung des zweiten Dachelements, welche in einer einfachen Ausbildung der Erfindung über einen Viergelenkmechanismus an die Verdeckkinematik angebunden ist, kann über eine Bewegung eines Verdeckgestänges um ein Hauptlager realisiert werden.

Eine besonders steife und unfallsichere Ausgestaltung eines erfindungsgemäßen Verdecks kann dadurch realisiert werden, dass das vordere Dachsegment mittels seitlicher Bereiche des ersten Dachelements in geschlossenem Zustand des Verdecks an dem Windschutzscheibenrahmen festlegbar ist.

Ein einfacher Mechanismus zur sicheren und plan abschließenden Anordnung des zweiten Dachelements in geschlossenem Zustand des Verdecks an dem ersten Dachelement des vorderen Dachsegments ist geschaffen, wenn das erste und das zweite Dachelement des vorderen Dachsegments wenigstens bereichsweise in Randbereichen einen L-förmigen Absatz aufweisen, wobei die L-förmigen Absätze des ersten Dachelements und des zweiten Dachelements in geschlossenem Zustand des Verdecks komplementär zueinander angeordnet sind. Durch einen derartigen Mechanismus können die Oberseiten des ersten Dachelements und des zweiten Dachelements des vorderen Dachsegments vorteilhafterweise ohne Absatz zueinander ausgebildet werden und sind somit strömungstechnisch vorteilhaft angeordnet.

Wenn der L-förmige Absatz des ersten Dachelements derart ausgebildet ist, dass er in geschlossenem Zustand des Verdecks oberhalb des L-förmigen Absatzes des zweiten Dachelements angeordnet ist, dann kann das zweite Dachelement des vorderen Dachsegments beim Überführen des Verdecks von einer geschlossenen in eine offene Position auf einfache Weise in Richtung eines Fahrzeugbodens verschwenkt werden. Umgekehrt ist das Heranführen des zweiten Dachelements an das erste Dachelement des vorderen Dachsegments bei einer Überführung des Verdecks von einer offenen in eine geschlossene Position bei einer derartigen Anordnung der L-förmigen Absätze auf einfache Weise möglich.

Kein weiterer Verschlussmechanismus zur Festlegung des zweiten Dachelements an dem ersten Dachelement in geschlossenem Zustand des Verdecks ist nötig, wenn sowohl der L-förmige Absatz des ersten Dachelements als auch der L-förmige Absatz des zweiten Dachelements des vorderen Dachsegments im gesamten Bereich, in welchem in geschlossenem Zustand des Verdecks das erste Dachelement mit dem zweiten Dachelement des vorderen Dachsegments zusammenwirkt, ausgebildet ist. Somit wird das zweite Dachsegment vorteilhafterweise von drei Seiten, also jeweils in den den Fahrzeugseiten zugewandten Bereichen und dem fahrzeugheckseitigen Bereich, an dem ersten Dachelement des vorderen Dachsegments in Fahrzeughochrichtung festgelegt, wodurch keine separate Verriegelung des zweiten Dachelements des vorderen Dachsegments an dem Windschutzscheibenrahmen vorgesehen werden muss.

Eine einfache Festlegung des zweiten Dachelements des vorderen Dachsegments in geschlossenem Zustand des Verdecks an dem Windschutzscheibenrahmen kann vorteilhafterweise derart ausgebildet sein, dass das zweite Dachelement in seinem in geschlossenem Zustand des Verdecks dem Windschutzscheibenrahmen zuweisenden Randbereich einen L-förmigen Absatz aufweist, welcher in geschlossenem Zustand des Verdecks oberhalb eines L-förmigen Absatzes des Windschutzscheibenrahmens angeordnet ist, womit die Oberfläche des zweiten Dachelements ohne Absatz mit einer Oberfläche des Windschutzscheibenrahmens zusammenwirkt.

Die seitlichen Bereiche des ersten Dachelements des vorderen Dachsegments können bei offenem Zustand des Verdecks und somit zurückgeschwenktem zweiten Dachelement des vorderen Dachsegments in einer vorteilhaften Ausgestaltung der Erfindung eine obere Begrenzung von einem Ablageraum eines Verdeckgestänges bilden, wodurch ein separater Deckel hierfür entfallen kann.

Weitere Vorteile und vorteilhafte Ausführungen eines Verdecks eines Cabriolet-Fahrzeugs nach der Erfindung ergeben sich aus den Patentansprüchen, der Zeichnung und der Beschreibung.

Nachfolgend ist ein vorteilhaftes Ausführungsbeispiel anhand der Zeichnung prinzipmäßig beschrieben.

Es zeigt:
- Fig. 1: eine ausschnittsweise dreidimensionale Prinzipskizze eines Cabriolet-Fahrzeugs mit einem erfindungsgemäß gestalteten Verdeck in einer Schließstellung;
- Fig. 2: eine ausschnittsweise dreidimensionale Prinzipskizze des Cabriolet-Fahrzeugs der Fig. 1 mit dem Verdeck in einer Zwischenposition des Verdecks;
- Fig. 3: eine ausschnittsweise dreidimensionale Prinzipskizze des Cabriolet-Fahrzeugs der Fig. 1 und Fig. 2 mit dem Verdeck in einer Öffnungsstellung, wobei zur besseren Darstellung des Verdecks in seiner Ablageposition ein fahrzeugheckseitiger Bereich einer Fahrzeugkarosserie nicht dargestellt ist;
- Fig. 4: eine stark vereinfachte ausschnittsweise Darstellung eines Schnitts durch das Verdeck der Fig. 1 bis Fig. 3 in Richtung einer Fahrzeugmittelebene, welche eine Anordnung eines vorderen Dachsegments des Verdecks an einem Windschutzscheibenrahmen zeigt, wobei das Verdeck in einer Schließstellung dargestellt ist; und
- Fig. 5: eine stark vereinfachte dreidimensionale Darstellung eines ersten Dachelements des vorderen Dachsegments in Alleinstellung.

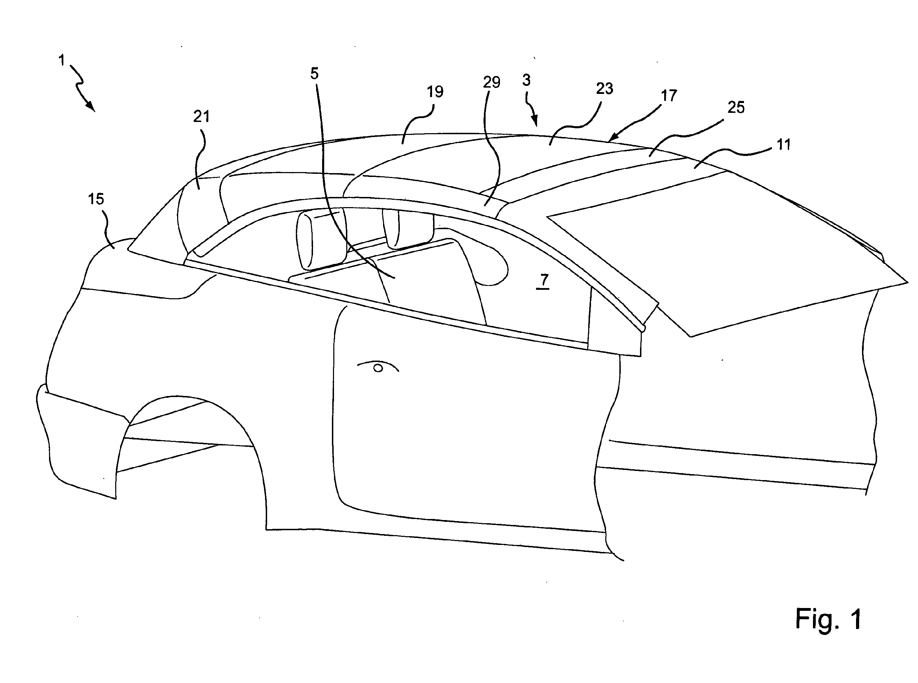

In Fig. 1 ist ein Cabriolet-Fahrzeug 1 mit einem in einer Schließstellung dargestellten, vorliegend dreiteilig ausgebildeten Hard-Top-Verdeck 3 abgebildet, welches einen auch Fondsitze 5 aufweisenden Fahrgastraum 7 von einem einen heckseitigen Raum 13 begrenzenden Heckdeckel 15 bis zu einem Windschutzscheibenrahmen 11 überspannt.

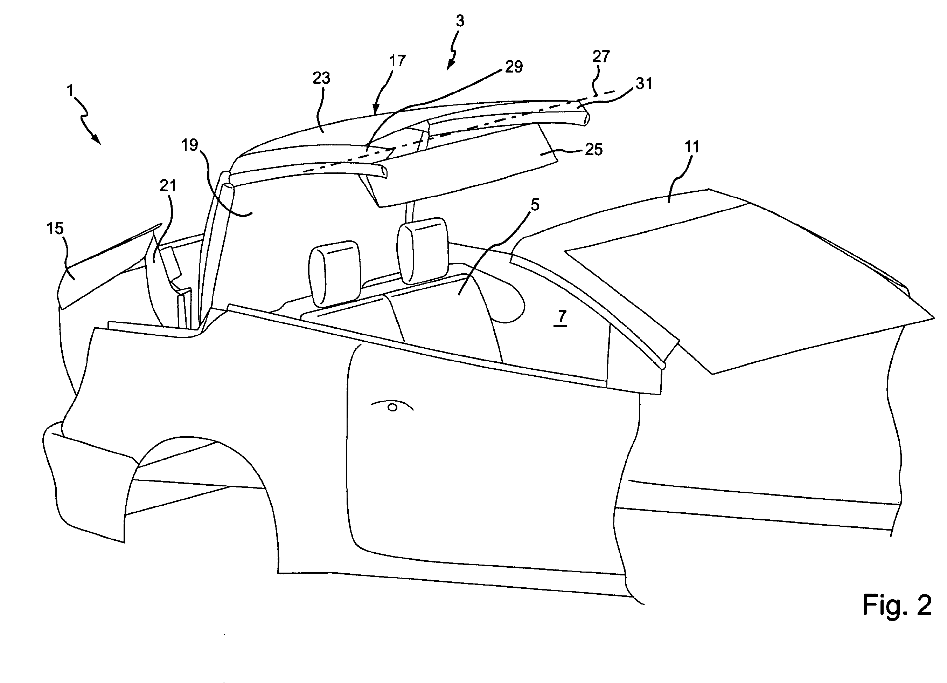

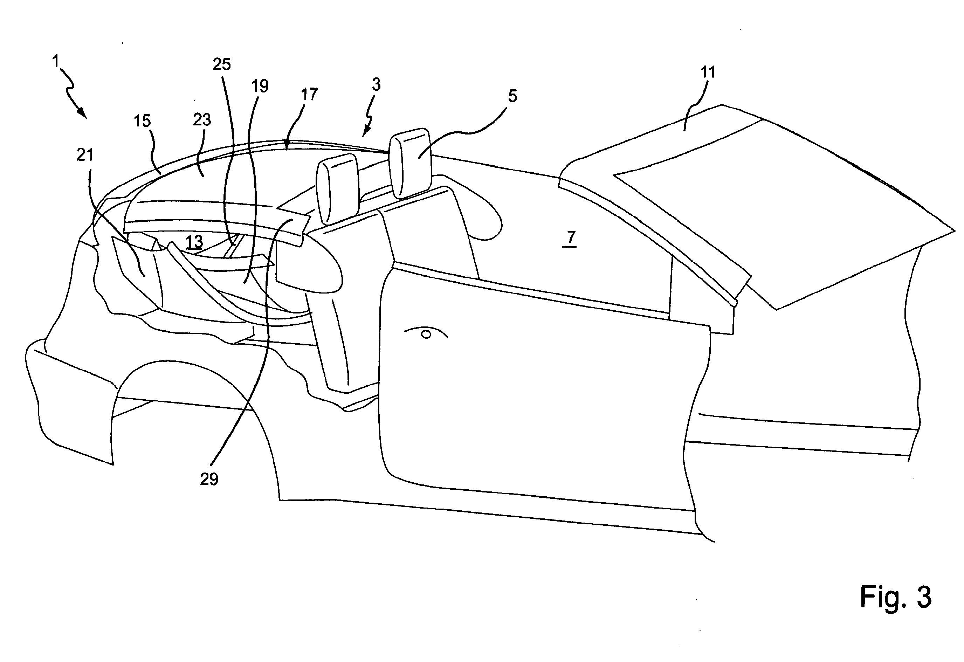

Das dreiteilig ausgebildete Verdeck 3 weist ein vorderes Dachsegment 17, ein mittleres Dachsegment 19 und ein hinteres Dachsegment 21 auf, wobei die Dachsegmente 17, 18 und 19 über ein nicht näher dargestelltes Verdeckgestänge mechanisch miteinander gekoppelt sind, so dass das Verdeck 3 von der in Fig. 1 dargestellten Schließposition über eine in der Fig. 2 dargestellten Zwischenposition in eine in der Fig. 3 dargestellte Öffnungsposition überführbar ist.

Das vordere Dachsegment 17 des Verdecks 3 ist zweiteilig ausgebildet, wobei an einem einen Grundkörper des vorderen Dachsegments 17 bildenden ersten Dachelement 23 ein zweites Dachelement 25 angelenkt ist. Das zweite Dachelement 23 des vorderen Dachsegments 17 ist dabei über einen nicht näher dargestellten Viergelenkmechanismus mit dem Verdeckgestänge verbunden.

Das zweite Dachelement 25 des vorderen Dachsegments 17 ist wenigstens annähernd symmetrisch zu einer Fahrzeugmittellängsachse an dem ersten Dachelement 23 des vorderen Dachsegments 17 angeordnet, wobei ein vorderer Rand des zweiten Dachelements 25 in geschlossenem Zustand des Verdecks 3 mit dem Windschutzscheibenrahmen 11 zusammenwirkt.

Eine Festlegung des Verdecks 3 an dem Windschutzscheibenrahmen 11 in geschlossenem Zustand des Verdecks 3 wird über seitliche Bereiche 29 und 31 des ersten Dachelements 23, welche eine seitliche Begrenzung des zweiten Dachelements 25 des vorderen Dachsegments 17 bilden, realisiert.

An den in Fahrzeugfrontrichtung weisenden Seiten der seitlichen Bereiche 29 und 31 ist jeweils ein Haken 33 beziehungsweise 35 ausgebildet, wobei die Haken 33 und 35 bei einer Verdeckschließbewegung mit einem an dem Windschutzscheibenrahmen 11 angeordneten, in den jeweiligen Haken 33 beziehungsweise 35 eingreifenden Gegenelement zusammenwirken und von diesem an dem Windschutzscheibenrahmen 11 gehalten werden.

Die seitlichen Bereiche 29 und 31 des ersten Dachelements 23 fungieren in abgelegten Zustand des Verdecks 3 als Verdeckgestängeklappen und bilden somit eine Abdeckung des Verdeckgestänges in Fahrzeughochrichtung.

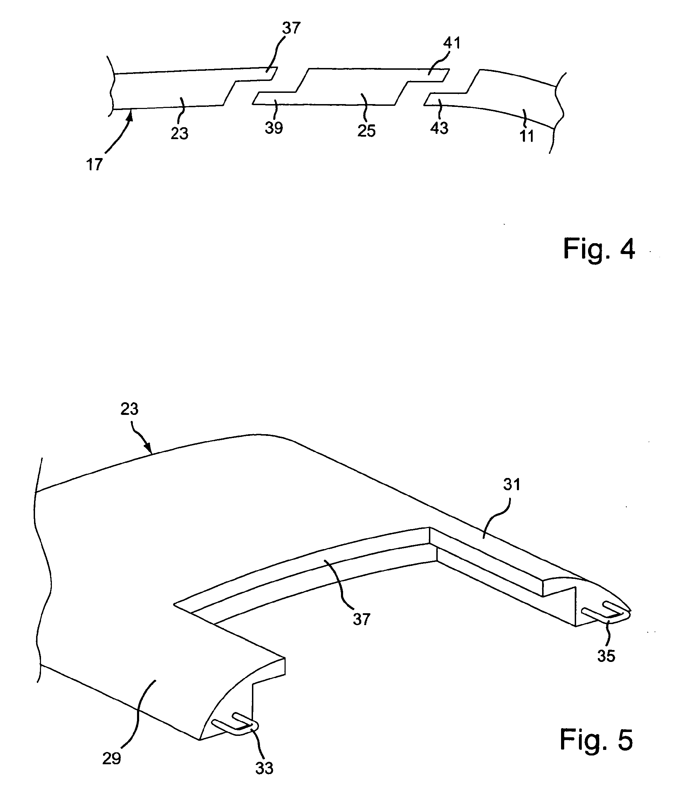

In Fig. 4 ist ein Schnitt entlang einer Mittellängsebene durch das vordere Dachsegment 17 und den Windschutzscheibenrahmen 11 dargestellt. Wie auch aus der Fig. 5 ersichtlich ist, weist das erste Dachelement 23 des vorderen Dachsegments 17 in seinen in Schließstellung mit dem zweiten Dachelement 25 zusammenwirkenden Randbereichen einen L-förmigen Absatz 37 auf, welcher mit einem im selben Randbereich ausgebildeten L-förmigen Absatz 39 des zweiten Dachelements in geschlossenem Zustand des Verdecks 3 zusammenwirkt.

Die L-förmigen Absätze 37 und 39 sind dabei derart komplementär angeordnet, dass der L-förmige Absatz 37 des ersten Dachelements 23 in geschlossenem Zustand des Verdecks 3 derart oberhalb des L-förmigen Absatzes 39 des zweiten Dachelements 25 angeordnet ist, dass die Oberflächen der beiden Dachelemente 23 und 25 bei geschlossenem Verdeck 3 zueinander fluchten, d. h. ohne eine Stufe ineinander übergehen.

Auch in einem in geschlossenem Zustand des Verdecks 3 mit dem Windschutzscheibenrahmen 11 zusammenwirkenden Randbereich des zweiten Dachelements 25 ist ein L-förmiger Absatz 41 ausgebildet, welcher wiederum mit einem L-förmigen Absatz 43 des Windschutzscheibenrahmens 11 zusammenwirkt. Der L-förmige Absatz 41 des zweiten Dachelements 25 ist dabei in Verdeckschließstellung oberhalb des L-förmigen Absatzes 43 des Windschutzscheibenrahmens 11 angeordnet, wobei die Oberflächen des zweiten Dachelements 25 und des Windschutzscheibenrahmens 11 bei geschlossenem Verdeck 3 wiederum zueinander fluchten.

In einer alternativen Ausbildung der Erfindung kann es selbstverständlich auch vorgesehen sein, dass die L-förmigen Absätze nur in einem Bereich der in Verdeckschließstellung zusammenwirkenden Randbereiche ausgebildet sind.

Da das zweite Dachelement 25 sowohl an seinem dem Fahrzeugheck zugewandten Randbereich wie auch an seinen den seitlichen Bereichen 29 und 31 des ersten Dachelements 23 zugewandten Rändern und somit an drei Seiten mit seinem L-förmigen Absatz 39 unterhalb des L-förmigen Absatzes 37 des ersten Dachelements 23 angeordnet ist, bedarf es vorteilhafterweise keiner separaten Verriegelung des zweiten Dachelements 25 an dem Windschutzscheibenrahmen 11, denn die Arretierung des zweiten Dachelementes 25 ist bei der Verriegelung des ersten Dachelements 23 ausreichend.

Bei einer Öffnungsbewegung des Verdecks 3 wird zunächst das vordere Dachsegment 17 über das Gegenelement von den Haken 33 und 35 des ersten Dachelements 23 entriegelt und anschließend von dem Windschutzscheibenrahmen 11, oberhalb welchem das zweite Dachelement 25 angeordnet ist, angehoben. Zeitgleich mit einer im Wesentlichen translatorischen Verlagerung des ersten Dachelements 23 des vorderen Dachsegments 17 in Fahrzeugheckrichtung wird das zweite Dachelement 25 des vorderen Dachsegments 17 bei in Fahrzeugheckrichtung verschwenktem Heckdeckel 15 um seine Schwenkachse 27 in Richtung des Fahrzeugbodens verschwenkt.

Die Dachsegmente 17, 19 und 21 werden dann in dem heckseitigen Raum 13 abgelegt. Dabei wird das vordere Dachsegment 17 auf dem mittleren Dachsegment 19, welches wiederum auf dem hinteren Dachsegment 21 angeordnet ist, abgelegt. Das hintere Dachsegment 21 und das mittlere Dachsegment 19 sind in Ablageposition des Verdecks 3 derart in dem heckseitigen Raum 13 angeordnet, dass sie mit ihrer in Verdeckschließstellung oberen Seite in Richtung eines Fahrzeugbodens weisen.

Das erste Dachelement 23 des vorderen Dachsegments 17 wird dagegen von dem Verdeckgestänge derart bewegt, dass die Oberseite des ersten Dachelements 23 in Verdecköffnungsstellung eine obere Begrenzung des heckseitigen Raums 13 bildet.

Das zweite Dachelement 25 des vorderen Dachsegments 17 wird bei der Überführung des Verdecks von seiner Schließstellung in seine Öffnungsstellung um eine Schwenkachse 27 derart in Richtung des Fahrzeugbodens verschwenkt, dass es in Verdecköffnungsstellung wenigstens annähernd senkrecht in einem vorderen Bereich des heckseitigen Raums 13 zwischen dem ersten Dachelement 23 des vorderen Dachsegments 17 und dem mittleren Dachsegment 19 Platz sparend angeordnet ist.

## Patentansprüche

1. Verdeck eines Cabriolet-Fahrzeugs (1) mit wenigstens zwei Dachsegmenten (17, 19, 21), welches in einem geschlossenen Zustand einen Fahrgastraum (7) überspannt und in einen offenen Zustand überführbar ist, wobei ein vorderes Dachsegment (17) in geschlossenem Zustand des Verdecks (3) an einem Windschutzscheibenrahmen (11) festlegbar ist,
**dadurch gekennzeichnet,**
**dass** das vordere Dachsegment (17) zweiteilig ausgebildet ist, mit einem einen Grundkörper des vorderen Dachsegments (17) bildenden ersten Dachelement (23) und einem hieran angelenkten, einen Randbereich des vorderen Dachsegments (17) gegenüber dem Windschutzscheibenrahmen (11) bildenden zweiten Dachelement (25), welches in einem bezüglich einer Fahrzeugquerrichtung wenigstens annähernd mittigen Bereich des ersten Dachelements (23) angeordnet ist und um eine sich in Fahrzeugquerrichtung erstreckende Schwenkachse (27) verschwenkbar ist.

2. Verdeck nach Anspruch 1,
**dadurch gekennzeichnet,**
**dass** die Schwenkachse (27) des zweiten Dachelements (25) in einem einem Fahrzeugheck (9) zugewandten Bereich des zweiten Dachelements (25) angeordnet ist.

3. Verdeck nach einem der Ansprüche 1 oder 2,
**dadurch gekennzeichnet,**
**dass** das zweite Dachelement (25) des vorderen Dachsegments (17) bei einer Überführung des Verdecks (3) von einer geschlossenen in eine offene Position in Fahrzeugbodenrichtung um seine Schwenkachse (27) bewegt wird.

4. Verdeck nach einem der Ansprüche 1 bis 3,
**dadurch gekennzeichnet,**
**dass** das zweite Dachelement (25) des vorderen Dachsegments (17) in offenem Zustand des Verdecks (3) wenigstens annähernd vertikal in einem heckseitigen Raum (13) ablegbar ist.

5. Verdeck nach einem der Ansprüche 1 bis 4,
**dadurch gekennzeichnet,**
**dass** die Verlagerung des zweiten Dachelements (25) des vorderen Dachsegments (17) zwangsgesteuert über eine Verdeckkinematik erfolgt.

6. Verdeck nach Anspruch 5,
**dadurch gekennzeichnet,**
**dass** das zweite Dachelement (25) des vorderen Dachsegments (17) über einen Viergelenkmechanismus an die Verdeckkinematik angebunden ist.

7. Verdeck nach einem der Ansprüche 1 bis 6,
**dadurch gekennzeichnet,**
**dass** das vordere Dachsegment (17) mittels seitlicher Bereiche (31, 33) des ersten Dachelements (23) in geschlossenem Zustand des Verdecks (3) an dem Windschutzscheibenrahmen (11) festlegbar ist.

8. Verdeck nach einem der Ansprüche 1 bis 7,
**dadurch gekennzeichnet,**
**dass** das erste und das zweite Dachelement (23, 25) des vorderen Dachsegments (17) wenigstens bereichsweise in Randbereichen einen L-förmigen Absatz (37, 39) aufweisen, wobei die L-förmige Absätze (37, 39) des ersten Dachelements (23) und des zweiten Dachelements (25) in geschlossenem Zustand des Verdecks (3) komplementär zueinander angeordnet sind.

9. Verdeck nach Anspruch 8,
**dadurch gekennzeichnet,**
**dass** der L-förmige Absatz (37) des ersten Dachelements (23) derart ausgebildet ist, dass er in geschlossenem Zustand des Verdecks (3) oberhalb des L-förmigen Absatzes (39) des zweiten Dachelements (25) angeordnet ist.

10. Verdeck nach einem der Ansprüche 8 oder 9,
**dadurch gekennzeichnet,**
**dass** sowohl der L-förmige Absatz (37) des ersten Dachelements (23) als auch der L-förmige Absatz (39) des zweiten Dachelements (25) des vorderen Dachsegments (17) im gesamten Bereich, in welchem in geschlossenem Zustand des Verdecks (3) das erste Dachelement (23) mit dem zweiten Dachelement (25) des vorderen Dachsegments (17) zusammenwirkt, ausgebildet ist.

11. Verdeck nach einem der Ansprüche 1 bis 10,
**dadurch gekennzeichnet,**
**dass** das zweite Dachelement (25) in seinem in geschlossenem Zustand des Verdecks (3) dem Windschutzscheibenrahmen (11) zuweisenden Randbereich einen L-förmigen Absatz (41) aufweist, welcher in geschlossenem Zustand des Verdecks (3) oberhalb eines L-förmigen Absatzes (43) des Windschutzscheibenrahmens (43) angeordnet ist.

12. Verdeck nach einem der Ansprüche 1 bis 11,
**dadurch gekennzeichnet,**
**dass** seitliche Bereiche (29, 31) des ersten Dachelements (23) des vorderen Dachsegments (17) bei offenem zustand des Verdecks (3) eine obere Begrenzung von einem Ablageraum eines Verdeckgestänges bilden.
